# EUROPEAN PATENT APPLICATION

(11) **EP 4 831 121 A1**
(43) Date of publication of application: **28.10.2026**
(21) Application number: 26173072.5
(22) Date of filing: 17.04.2026
(51) Int. Cl.: C01B 32/05

(54) **CARBON PARTICLE IN WHICH THROUGH-PORE AND MESOPORES ARE FORMED AND METHOD FOR MANUFACTURING THE SAME**

(30) Priority: 22.04.2025 JP 2025070587
(71) Applicant: Toyota Jidosha Kabushiki Kaisha, Toyota-shi, Aichi-ken 471-8571 (JP); Kyushu University, National University Corporation, Nishi-ku Fukuoka-shi Fukuoka 819-0395 (JP); Kawano Lab., Co., Ltd., Osaka 560-0042 (JP)
(72) Inventor: NOMURA, Kumiko, Toyota-shi, 471-8571 (JP); MAEKAWA, Ryosuke, Toyota-shi, 471-8571 (JP); NAKABAYASHI, Koji, Fukuoka-shi, Fukuoka, 819-0395 (JP); YOON, Seong-Ho, Fukuoka-shi, Fukuoka, 819-0395 (JP); MIYAWAKI, Jin, Fukuoka-shi, Fukuoka, 819-0395 (JP); TAKAI, Chica, Gifu-shi, Gifu, 501-1193 (JP); KAWANO, Makoto, Osaka, 560-0042 (JP)
(74) Representative: Kuhnen & Wacker Patent- und Rechtsanwaltsbüro PartG mbB

(57) **Abstract**

Provided is a novel carbon particle in which a through-pore and mesopores are formed, wherein the through-pore has a radius that is at least three times a modal diameter of the mesopores.

## Description

### BACKGROUND

### Technical Field

The present disclosure relates to a carbon particle in which a through-pore and mesopores are formed, and a method for manufacturing the same.

### Background Art

JP 2010-186678 A discloses a catalyst layer for a fuel cell in which a catalyst is mixed with a polymer electrolyte. The catalyst is prepared by supporting catalyst fine particles on a carbon carrier having only pores with opening diameters of 4 nm or more.

Chika Takai, Masayoshi Fuji, and Kyoichi Fujimoto, "Skeletal Silica Nanoparticles Prepared by Control of Reaction Polarity," Chemistry Letters, Vol. 40, No. 12, 2011, pp. 1346-1348 (hereinafter referred to as Non-Patent Document), describes a method for synthesizing skeletal silica nanoparticles using cubic calcite as a template.

### SUMMARY

The inventors found that carbon particles having a peculiar structure can be manufactured using the skeletal silica nanoparticles disclosed in Non-Patent Document. The present disclosure provides a novel carbon particle in which a through-pore and mesopores are formed, and a method for manufacturing the same.

The aspects of the present disclosure include the following.
[Aspect 1] A carbon particle in which a through-pore and mesopores are formed,
   wherein the through-pore has a radius that is at least three times a modal diameter of the mesopores.
[Aspect 2] The carbon particle according to Aspect 1,
   wherein the modal diameter of the mesopores is 1 nm to 7 nm.
[Aspect 3] The carbon particle according to Aspect 1 or 2,
   wherein the carbon particle has a radius of 100 nm to 200 nm.
[Aspect 4] A method for manufacturing a carbon particle in which a through-pore and mesopores are formed, the method comprising, in this order:
   coating a skeletal silica nanoparticle with carbon by a chemical vapor deposition method;
   obtaining a first carbon particle by removing the skeletal silica nanoparticle through dissolution;
   obtaining a second carbon particle having a through-pore by further coating the first carbon particle with carbon by the chemical vapor deposition method;
   depositing metal salt catalyst particles on the second carbon particle; and
   forming mesopores in the second carbon particle through a catalytic reaction by the metal salt catalyst particles.
[Aspect 5] The method according to Aspect 4, further comprising
   graphitizing the second carbon particle in which the mesopores are formed by heat treatment at 1400°C or higher.

### BRIEF DESCRIPTION OF THE DRAWINGS

FIG. 1 is a schematic cross-sectional view of a carbon particle according to an embodiment;
FIG. 2 is a flowchart illustrating a method for manufacturing a carbon particle according to the embodiment;
FIG. 3 is a projection view of a three-dimensional reconstructed image of a carbon particle obtained with a three-dimensional transmission electron microscope (3D-TEM), as viewed along an extending direction of a through-pore of the carbon particle; and
FIG. 4 is a slice cross-sectional image of a carbon particle obtained with a 3D-TEM.

### DETAILED DESCRIPTION

The following description illustrates embodiments with reference to the drawings, as necessary. However, the present disclosure is not limited to the embodiments described below. Various modifications, changes, additions, omissions, and/or combinations of the embodiments described below can be made without departing from the scope of the claims.

In the drawings referred to in the following description, the same reference numerals may be used for the same components or for components having similar functions, and their repeated explanations may be omitted in some cases. For convenience of explanation, dimensional ratios and shapes of respective components in the drawings may be exaggerated and may be differ from actual dimensional ratios and shapes in some cases.

A numerical range expressed herein using the term "to" includes respective values described before and after the term "to" as the lower limit and the upper limit, unless otherwise specified. The upper and lower limits described herein may be used individually or in any appropriate combination.

The terms "comprise," "include," and "contain" as used herein mean that an additional component or element may be present and also encompass the phrases "consisting essentially of' and "consisting of", unless otherwise specified. The phrase "consisting essentially of' means that an additional component or element that has no substantial adverse effect may be present. The term "consisting of' means that only the described materials or elements are included, but inevitable impurities may also be present.

### I. Carbon Particle

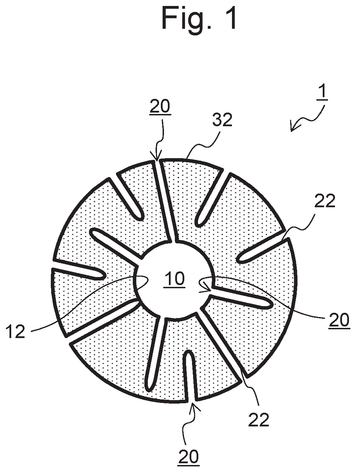

FIG. 1 illustrates a carbon particle 1 according to the embodiment. In the carbon particle 1, a through-pore 10 and mesopores 20 are formed. At least one through-pore 10 and a plurality of mesopores 20 may be formed in the carbon particle 1. A surface of the carbon particle 1 may include a through-pore inner surface 12, which defines the through-pore 10, mesopore inner surfaces 22, which define the mesopores 20, and an outer surface 32.

The through-pore 10 has a radius that is at least three times the modal diameter of the mesopores 20. The modal diameter of the mesopores 20 may be 1 nm to 7 nm or 3 nm to 6 nm. The radius of the through-pore 10 may be 20 nm to 55 nm or 30 nm to 50 nm.

The radius of the through-pore 10 is determined by obtaining a scanning electron microscope (SEM) image of carbon particles 1, selecting a carbon particle 1 in which the through-pore 10 extends parallel to a depth direction of the SEM image (i.e., an observation direction), and determining an area-equivalent radius of the through-pore 10 of the carbon particle 1.

The modal diameter of the mesopores 20 is determined by obtaining an adsorption isotherm of the carbon particles 1 using the nitrogen gas adsorption method, obtaining a pore size distribution by analyzing the adsorption isotherm using the BJH method, and determining the maximum frequency pore size in the pore size distribution.

The carbon particle 1 may have a radius of 100 nm to 200 nm or 100 nm to 150 nm. The radius of the carbon particle 1 is determined by obtaining an SEM image of the carbon particle 1 and determining an area-equivalent radius of the carbon particle 1.

The carbon particles 1 can be used as a carrier for fine particles (catalyst fine particles) that catalyze an electrochemical reaction in a fuel cell. Examples of the catalyst fine particles include platinum fine particles. The catalyst fine particles are usually supported on the surfaces of the carbon particles 1 and in the mesopores 20 (i.e., on the mesopore inner surfaces 22). The catalyst fine particles can be supported on the carbon particles 1 by any method. Examples of supporting methods include, for example, (1) a method of forming catalyst metal fine particles by bringing the carbon particles 1 into contact with a solution containing ions of a catalyst metal element, adsorbing the ions onto the carbon particles 1, then retaining the carbon particles 1 in a reducing atmosphere to reduce the ions to the metal, (2) a method of forming catalyst metal fine particles on the carbon particles 1 by immersing the carbon particles 1 in a solution containing ions of a catalyst metal element and reducing the ions in the solution, and (3) a method of supporting catalyst fine particles directly on the carbon particles 1 using a physical method. If the catalyst fine particles are alloy fine particles, examples of the method of supporting the catalyst fine particles on the carbon particles 1 include supporting each metal constituting the alloy on the carbon particles 1, followed by heating the carbon particles 1 to form the alloy fine particles.

The carbon particles 1 on which catalyst fine particles are supported can be used to form a catalyst layer in a fuel cell. In the catalyst layer formed using the carbon particles 1, gas can pass not only between the carbon particles 1 but also through the through-pores 10 of the carbon particles 1. Therefore, the catalyst layer formed using the carbon particles 1 can have high gas diffusivity.

In the catalyst layer, the outer surfaces 32 and the through-pore inner surfaces 12 of the carbon particles 1 may be coated with ionomer. The ionomer is a polymer electrolyte having proton conductivity. Examples of resins that can be used as ionomers include perfluorinated proton-exchange resins of a fluoroalkyl copolymer having fluoroalkyl ether side chains and perfluoroalkyl side chains. In the catalyst layer of a fuel cell, an electrochemical reaction occurs at a three-phase interface of gas, the catalyst fine particles, and the ionomer. In the catalyst layer formed using the carbon particles 1, the three-phase interface of the catalyst fine particles supported inside the mesopores 20, the gas, and the ionomer is formed not only in the vicinity of the outer surfaces 32 of the carbon particles 1, but also in the vicinity of the through-pore inner surfaces 12. As a result, the electrochemical reaction proceeds more efficiently than in a case where the through-pores 10 are not formed in the carbon particles 1. Therefore, the fuel cell having the catalyst layer formed using the carbon particles 1 may exhibit high power performance.

### II. Method for Manufacturing Carbon Particle

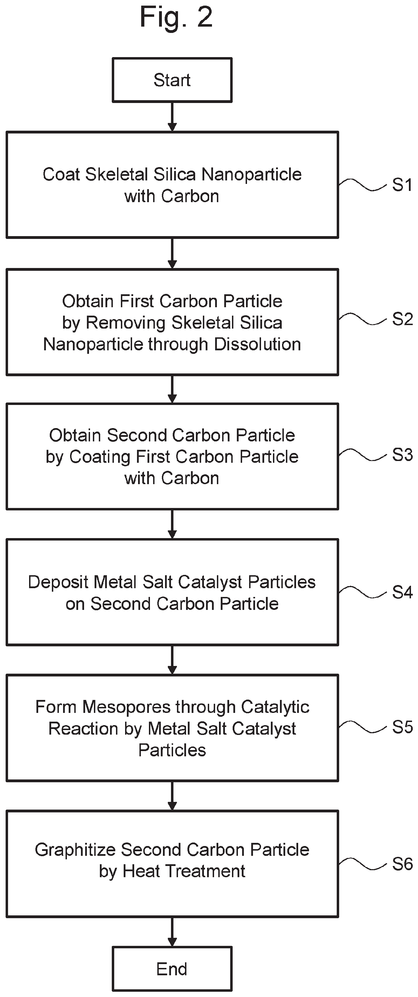

FIG. 2 illustrates a flowchart of a method for manufacturing the carbon particle according to the embodiment. The method for manufacturing the carbon particle includes, in this order, coating a skeletal silica nanoparticle with carbon by the chemical vapor deposition (CVD) method (S1), obtaining a first carbon particle by removing the skeletal silica nanoparticle through dissolution (S2), obtaining a second carbon particle having a through-pore by further coating the first carbon particle with carbon by the CVD method (S3), depositing metal salt catalyst particles on the second carbon particle (S4), forming mesopores in the second carbon particle through a catalytic reaction by the metal salt catalyst particles (S5), and graphitizing the second carbon particle in which the mesopores are formed by heat treatment (S6). It should be noted that graphitizing the second carbon particle in which the mesopores are formed by heat treatment (S6) is an optional step and not essential. Using the manufacturing method according to the embodiment, the carbon particle 1 (see FIG. 1) in which the through-pore 10 and the mesopores 20 are formed, according to the above embodiment, can be manufactured.

### (1) Coating a skeletal silica nanoparticle with carbon by the CVD method (S1)

A skeletal silica nanoparticle can be produced by the method described in Non-Patent Document, using approximately cube-shaped calcite as a template. The skeletal silica nanoparticle usually has a frame-like skeletal shape along the vertices and edges of a cube. In the skeletal silica nanoparticle, the inside of the cube is hollow, and each face of the cube may have pores. A cube herein includes not only an exact cube shape but also an approximate cube shape, such as a shape with rounded vertices and/or edges of the cube and a shape with varying lengths on each side of the cube. The carbon source used for the CVD method may be selected as appropriate. Conditions for the CVD method (such as reaction temperature, gas flow rate, and reaction time) may be set as appropriate.

### (2) Obtaining a first carbon particle by removing the skeletal silica nanoparticle through dissolution (S2)

By immersing the carbon-coated skeletal silica nanoparticle in a solution that dissolves silica (for example, a heated potassium hydroxide aqueous solution or sodium hydroxide aqueous solution) and stirring them for a predetermined time, the skeletal silica nanoparticle can be dissolved and removed. Next, the solid contents are collected from the solution by suction filtration or the like to obtain a first carbon particle. Immersion of the carbon-coated skeletal silica nanoparticle in the silica-dissolving solution and collection of the solid contents may be performed multiple times. This can result in more complete removal of the skeletal silica nanoparticle.

### (3) Obtaining a second carbon particle having a through-pore by further coating the first carbon particle with carbon by the CVD method (S3)

Cavities formed by removing the skeletal silica nanoparticle are present in the first carbon particle. In order to fill the cavities with carbon, the first carbon particle is further coated with carbon by the CVD method. As a result, a second carbon particle having a through-pore is obtained. The carbon source used for the CVD method may be selected as appropriate. The conditions for the CVD method (such as reaction temperature, gas flow rate, and reaction time) may be set as appropriate.

### (4) Depositing metal salt catalyst particles on the second carbon particle (S4)

Metal salt particles, which function as a catalyst to form mesopores in the subsequent step S5 of forming mesopores, are deposited on the second carbon particle. Examples of metal salts that function as a catalyst to form mesopores include nickel nitrate and iron nitrate. Examples of the method of depositing metal salt particles on the second carbon particle include a method of adding the second carbon particle to a metal salt aqueous solution, stirring the mixture, then collecting and drying the solid contents.

### (5) Forming mesopores in the second carbon particle through a catalytic reaction by the metal salt catalyst particles (S5)

In order to form mesopores through a catalytic reaction by the metal salt catalyst particles, the second carbon particle with the metal salt catalyst particles deposited thereon may be heated in a reducing atmosphere. The formed mesopores can have pore sizes equivalent to the particle sizes of the metal salt catalysts. Therefore, by controlling the modal diameter of the metal salt catalysts, the modal diameter of the mesopores can be controlled.

Depositing metal salt catalyst particles on the second carbon particle (S4) and forming mesopores in the second carbon particle through the catalytic reaction by the metal salt catalyst particles (S5) may be repeated multiple times. As a result, the volume of the mesopores formed in the second carbon particle can be increased.

### (6) Graphitizing the second carbon particle by heat treatment (S6)

The second carbon particle in which the mesopores are formed may be subjected to heat treatment to graphitize the carbon. The temperature of the heat treatment may be 1400°C or higher.

### EXAMPLES

The following further specifically describes the present disclosure using examples. However, the scope of the present disclosure is not limited to these examples.

### (1) Manufacture of Carbon Particles in Which Through-Pores and Mesopores are Formed

Skeletal silica nanoparticles were produced according to the method described in Non-Patent Document. Specifically, first, carbon dioxide gas was added to a calcium chloride solution to form cube-shaped calcite. After the solution turned white, dehydroabietic acid (DAA) was added thereto, and the DAA was adsorbed onto the calcite. The calcite onto which the DAA was adsorbed was suspended in ethanol to obtain a suspension. A sol-gel reaction was initiated with addition of tetraethoxysilane (TEOS), ammonium hydroxide (NH₄OH), and distilled water to the suspension. As a result, the DAA at the vertices and edges (sides) of the cube-shaped calcite desorbed, and silicic acid (SiOH) produced by the hydrolysis of the TEOS adsorbed to the vertices and edges of the calcite. The calcite onto which the SiOH was adsorbed was separated from the suspension and resuspended in distilled water. Hydrochloric acid (HCl) was then added to the suspension to dissolve and remove the calcite. As a result, skeletal silica nanoparticles were obtained.

The skeletal silica nanoparticles were coated with carbon by the chemical vapor deposition (CVD) method using acetylene (C₂H₂) as the carbon source. The conditions for CVD were set as follows.
Carrier gas: Ar
Temperature increase rate: 10°C/min
Reaction temperature: 700°C
C₂H₂ flow rate: 40 mL/min
Ar flow rate: 160 mL/min
Reaction time: 1 h

The carbon-coated skeletal silica nanoparticles were added into a potassium hydroxide (KOH) aqueous solution (concentration 6 mol/L) at 65°C and stirred at 500 rpm for 72 hours. Next, the solid contents were collected by suction filtration, added into a KOH aqueous solution (concentration 6 mol/L) at 65°C again, and stirred at 500 rpm for 72 hours. As a result, the skeletal silica nanoparticles were dissolved and removed. The solid contents were collected by suction filtration to obtain carbon particles (first carbon particles).

The first carbon particles were coated with carbon by the CVD method using C₂H₂ as the carbon source, thereby obtaining carbon particles (second carbon particles) having through-pores. The conditions for CVD were set as follows.
Carrier gas: Ar
Temperature increase rate: 10°C/min
Reaction temperature: 700°C
C₂H₂ flow rate: 40 mL/min
Ar flow rate: 160 mL/min
Reaction time: 1.5 h

Nickel(II) nitrate hexahydrate (Ni(NO₃)₂•6H₂O) was dissolved in purified water to prepare a nickel(II) nitrate aqueous solution. The second carbon particles were added to the nickel(II) nitrate aqueous solution, suspended, and stirred at 300 rpm for 30 minutes. The amount of nickel contained in the nickel(II) nitrate aqueous solution was 5 parts by weight relative to 100 parts by weight of the second carbon particles added to the nickel(II) nitrate aqueous solution. The solid contents were collected by suction filtration and dried under reduced pressure at 120°C for one hour. As a result, second carbon particles with nickel(II) nitrate particles deposited thereon were obtained.

The second carbon particles with nickel nitrate particles deposited thereon were treated under the following conditions to form mesopores.
Reducing gas: Hydrogen
Carrier gas: Ar
Temperature increase rate: 5°C/min
Reaction temperature: 950°C
Hydrogen flow rate: 40 mL/min
Ar flow rate: 160 mL/min
Reaction time: 9 h

To increase the volume of the mesopores, the second carbon particles in which the mesopores were formed were added again to the nickel(II) nitrate aqueous solution, suspended, and stirred at 300 rpm for 30 minutes. The amount of nickel contained in the nickel(II) nitrate aqueous solution was 5 parts by weight relative to 100 parts by weight of the second carbon particles added to the nickel(II) nitrate aqueous solution. The solid contents were collected by suction filtration and dried under reduced pressure at 120°C for one hour.

Next, the second carbon particles were treated under the following conditions to increase the volume of the mesopores.
Reducing gas: Hydrogen
Carrier gas: Ar
Temperature increase rate: 5°C/min
Reaction temperature: 950°C
Hydrogen flow rate: 40 mL/min
Ar flow rate: 160 mL/min
Reaction time: 6 h

Next, the second carbon particles were heated at a temperature of 1400°C or higher for graphitization. As described above, carbon particles in which through-pores and mesopores were formed were obtained.

### (2) Structure Evaluation

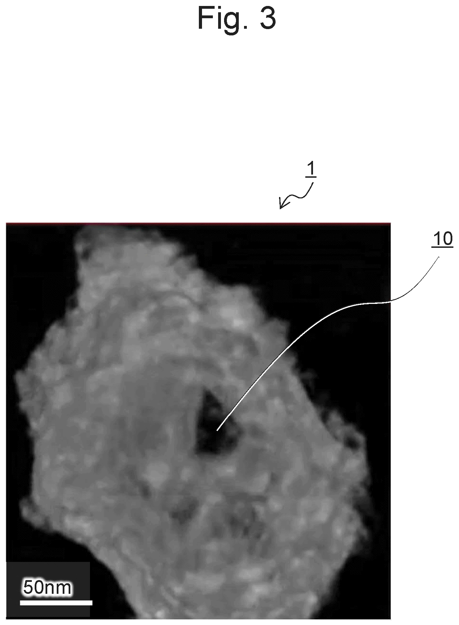

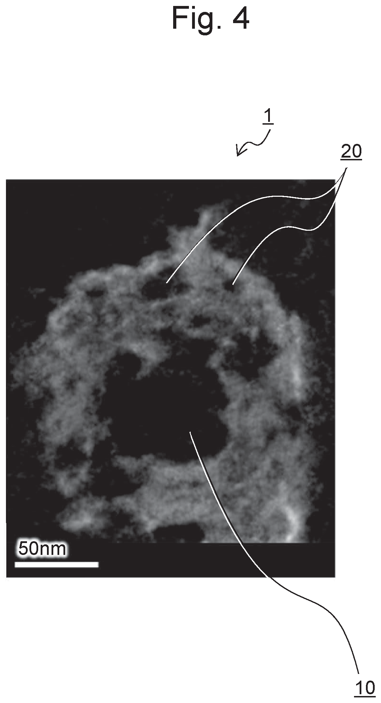

The manufactured carbon particles were observed with a three-dimensional transmission electron microscope (3D-TEM), and a three-dimensional reconstructed image and a slice cross-sectional image were obtained. From the projection view of the three-dimensional reconstructed image illustrated in FIG. 3, it was confirmed that the carbon particle had a through-pore in the central portion. From the slice cross-sectional image illustrated in FIG. 4, it was confirmed that the carbon particle had a plurality of mesopores in addition to the through-pore.

A scanning electron microscope (SEM) image of the manufactured carbon particles was obtained, 100 carbon particles in which the through-pores were extended parallel to the depth direction of the SEM image (i.e., the observation direction) were selected randomly, and the radius (area-equivalent radius) of the through-pore of each carbon particle was determined. The radii of the through-pores were within the range of 30 nm to 50 nm.

In addition, 100 carbon particles were selected randomly in the SEM image of the carbon particles, and the radius (area-equivalent radius) of each carbon particle was determined. The radii of the carbon particles were within the range of 100 nm to 150 nm.

The pore size distribution was determined by obtaining the adsorption isotherm of the carbon particles using the nitrogen gas adsorption method and analyzing the adsorption isotherm using the BJH method. The maximum frequency pore size in the pore size distribution (i.e., the modal diameter of the mesopores) was 5 nm.

### DESCRIPTION OF SYMBOLS

- 1: Carbon particle
- 10: Through-pore
- 12: Through-pore inner surface
- 20: Mesopore
- 22: Mesopore inner surface
- 32: Outer surface

## Claims

1. A carbon particle in which a through-pore and mesopores are formed,
wherein the through-pore has a radius that is at least three times a modal diameter of the mesopores.

2. The carbon particle according to claim 1,
wherein the modal diameter of the mesopores is 1 nm to 7 nm.

3. The carbon particle according to claim 1 or 2,
wherein the carbon particle has a radius of 100 nm to 200 nm.

4. A method for manufacturing a carbon particle in which a through-pore and mesopores are formed, the method comprising, in this order:
coating a skeletal silica nanoparticle with carbon by a chemical vapor deposition method;
obtaining a first carbon particle by removing the skeletal silica nanoparticle through dissolution;
obtaining a second carbon particle having a through-pore by further coating the first carbon particle with carbon by the chemical vapor deposition method;
depositing metal salt catalyst particles on the second carbon particle; and
forming mesopores in the second carbon particle through a catalytic reaction by the metal salt catalyst particles.

5. The method according to claim 4, further comprising
graphitizing the second carbon particle in which the mesopores are formed by heat treatment at 1400°C or higher.
